(19) Europäisches Patentamt
European Patent Office
Office européen des brevets

(11) **EP 2 012 601 B2**

## (12) NEW EUROPEAN PATENT SPECIFICATION
### After opposition procedure

(45) Date of publication and mention
of the opposition decision:
**01.07.2020   Bulletin 2020/27**

(51) Int Cl.:
*A24B 15/18* $^{(2006.01)}$   *A24B 15/16* $^{(2020.01)}$
*A24D 1/18* $^{(2006.01)}$

(45) Mention of the grant of the patent:
**23.05.2012   Bulletin 2012/21**

(86) International application number:
**PCT/SE2007/000405**

(21) Application number: **07748070.5**

(87) International publication number:
**WO 2007/126361 (08.11.2007 Gazette 2007/45)**

(22) Date of filing: **26.04.2007**

(54) **A MOIST SNUFF NON-TOBACCO COMPOSITION AND A METHOD FOR PRODUCTION THEREOF.**

FEUCHTE SCHNUPFZUSAMMENSETZUNG OHNE TABAK UND HERSTELLUNGSVERFAHREN DAFÜR

COMPOSITION HUMIDE A PRISER SANS TABAC ET SON PROCÉDÉ DE PRODUCTION

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **28.04.2006   SE 0600958**

(43) Date of publication of application:
**14.01.2009   Bulletin 2009/03**

(60) Divisional application:
**11182684.8 / 2 401 927**

(73) Proprietor: **Swedish Match North Europe AB**
**118 85 Stockholm (SE)**

(72) Inventors:
• **ESSÉN Tomas**
  **Holly Hill, South Hampton SO16 7QN (GB)**
• **BRÄNNBERG, Tobias**
  **448 91 Floda (SE)**

(74) Representative: **Valea AB**
  **Box 1098**
  **405 23 Göteborg (SE)**

(56) References cited:
WO-A1-2004/056218      WO-A2-2007/035486
GB-A- 981 137          US-A- 4 811 746
US-A- 4 817 640        US-A- 5 417 229
US-A1- 2002 170 567    US-A1- 2004 118 422
US-A1- 2004 123 873    US-A1- 2004 123 873

EP 2 012 601 B2

## Description

This invention concerns the technical field of non-tobacco products, in particular a non-tobacco moist snuff composition.

## Background

Tobacco can be used and/or consumed in a variety of products and methods. Most commonly, tobacco is smoked, chewed, or used as snuff.

Smokeless tobacco products are tobacco-based products that are held in the mouth for an extended period of time and either chewed or used as snuff ("dipped"). Chewing tobacco, which is popularly called chew or chaw, is available as coherent plugs. On the other hand, snuff is not chewed. Snuff is available in two forms-dry for sniffing, and moist (or wet), for placing between the lip and gum.

Unfortunately, the nicotine in tobacco is a substance to which people may become addicted. Thus, increasing attention by the medical profession and the public has been directed against chewing tobacco and moist snuff.

In light of the foregoing, there is a need for non-tobacco products intended for personal use as chew or snuff. Such smokeless non-tobacco products may be offered as a healthier alternative to smokeless tobacco products, especially for those who currently use smokeless tobacco products. Smokeless non-tobacco products could be developed without addictive nicotine.

Through US 2004/0123873 there is disclosed a non-tobacco moist snuff composition wherein corn silk is used for producing a non-tobacco moist snuff composition.

US 2004/118422 and WO 2004/056218 disclose a smokeless tobacco composition, in particular a moist snuff composition, comprising a thickening agent.

There are also dry non-tobacco snuff products for oral use currently on the Swedish market, Choice®, XQs™ and RealTaste. However they are not moist and will not resemble the feeling when using moist tobacco snuff products. Accordingly they all lack similarity with moist tobacco snuff products, e.g. snus, and they have not the taste and characteristics similar to moist tobacco snuff products, e.g. snus. Further several of the non-tobacco products are based on herbs. Herbs often have infections of bacteria and mould obtained from the fields.

Thus it is desirable to be able to provide a method for obtaining a moist non-tobacco product which resembles moist snuff, e.g. snus, so that a consumer feels comfortable in his/her mouth when using a moist non-tobacco product in comparison with when using moist snuff, e.g. snus. Accordingly it would be desirable to have a moist non-tobacco product with a moisture level which is relatively high. It is also desirable to provide a moist non-tobacco product with low bacteria content and which is thus safer for the consumer.

## Summary of the invention

The present invention solves one or more of the above problems by providing a non-tobacco moist snuff composition for oral use having a water content of 30 to 50 weight % based on the total weight of the final composition, comprising one or more type of plant fibers selected from maize fibers, oat fibers, tomato fibers, barley fibers, rye fibers, sugar beet fibers, buckwheat fibers, potato fibers, cellulose fibers, apple fibers, cocoa fibers, or a combination thereof, one or more humectants, NaCl and optionally other ingredients, wherein the non-tobacco moist snuff composition is obtainable by a method comprising the following steps:

> a) providing of one or more plant fibers selected from maize fibers, oat fibers, tomato fibers, barley fibers, rye fibers, sugar beet fibers, buckwheat fibers, potato fibers, cellulose fibers, apple fibers, cocoa fibers, or a combination thereof, preferably in flour form, optionally preceded by grinding or cutting and/or sieving of raw material for providing said one or more plant fibers;
> b) processing of one or more plant fibers provided in step a), preceded by mixing if more than one type of fibers is used or if fibers with different size distribution are used; wherein step b) comprises the following steps:
>
> > i) adding water, one or more humectants, and NaCl to the plant fibers under stirring to form a mixture; heating and keeping the mixture heated, thus achieving a pasteurisation of the mixture,
> > iii) cooling the moist snuff mixture; and
> > iv) optionally adding other ingredients such as one or more other salts, humectants, dyes, flavours and flavour additives, such as liquorice and ammonium chloride,
>
> c) and optionally packing, either in pouches, which is preferred, or as is in cans.

**Detailed description of the invention**

It is intended throughout the present description that the expression "plant fibers" embraces any plant fiber that may be useful when manufacturing a moist non-tobacco snuff.

When discussing the expression "water content" throughout the present description it is intended to embrace a water content measured by using Karl Fischer titration which is a known method for the person skilled in the art for measuring water (moisture) content.

When making snus, i.e. a tobacco-containing moist snuff, according to the **Gothia**Tek® standard the main ingredients except for tobacco are normally water, salt (table salt; NaCl) and sodium carbonate. Flavours and humectants may also be used. Salt is added mainly for its effect on taste but it also has a preservative action which contributes to improved shelf life of the products. Sodium carbonate is used to give the products their characteristic flavour profile but also brings the pH value to the slightly alkaline side. Sodium carbonate will convert to baking soda immediately after it is added. Flavours in general are natural or nature identical compounds that comply with food regulations. Flavours are usually dissolved in alcohol when added. Most of the alcohol evaporates during production. Only trace quantities remain. Humectants may also be added to protect the products from drying out. Two types may be used: glycerol and propylene glycol. Both of them also have a preservative effect since they lower the water activity of the product, thus preventing micro organisms from growing.

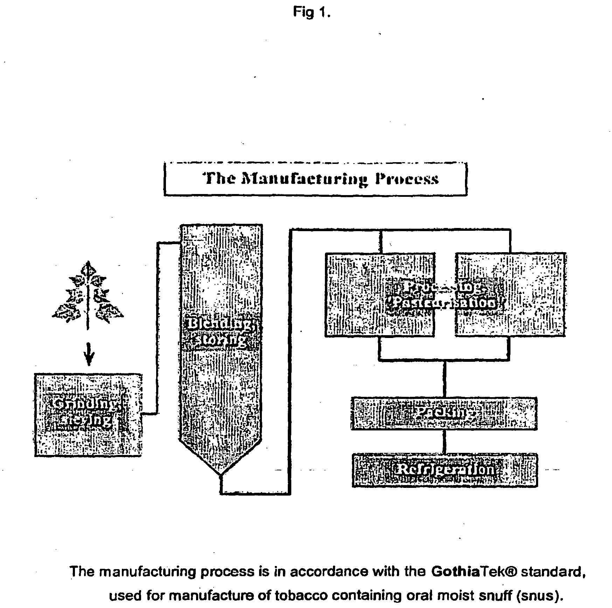

The moist tobacco-containing snuff is then manufactured in two major steps, a) grinding (cutting) and b) processing (see Figure 1).

**a) Grinding, sieving**

The tobacco is broken up, dried and fed into a grinder. The ground tobacco is sieved into three particle size fractions, coarse, medium and fine. Pre-set quantities of the three fractions are fed into a mixer silo where the tobacco flour is mixed. After blending, the tobacco flour is fed into a storage silo, from which flour is automatically taken to the processing operation. Each type of tobacco mixture is kept in a separate silo.

**b) Processing**

Manufacturing of Swedish moist snuff is preferably done in a batch operation. The whole process may be computer controlled and can be run day and night, all week around. To start the process, tobacco flour is automatically weighed and fed into the process blender. Water and salt is added to the batch under stirring. The batch is then heated and kept heated up for a specified time, which varies with brands. Temperature and stirring is preferably controlled by a process computer program. This part of the process is traditionally named "sweating" but is more close to a pasteurisation process. After pasteurisation the moist snuff batch is cooled down and the rest of the ingredients are added. The power of the mixing and the time period for the mixing may be crucial for obtaining an optimal product.

According to a preferred embodiment of the present invention water is added in step i) giving a final moisture content of approximately from 30 to 50% per weight or more, preferably approximately from 35 to 41 %, as determined by Karl Fischer titration, to obtain good performance for packing the product in pouches.

According to a preferred embodiment of of the present invention there is provided a non-tobacco moist snuff composition wherein the humectant is glycerol or propylene glycol or a combination thereof, preferably glycerol.

According to a preferred embodiment of the present invention there is provided a non-tobacco moist snuff composition wherein the NaCl is added in an amount from approximately 6 to 16 % (calculated on dry basis according to Formula I as set out below), preferably 8 to 10 %.

According to a preferred embodiment of the present invention there is provided a non-tobacco moist snuff composition wherein glycerol is added in an amount from approximately 2 to 15 % (based on Formula II as set out below), preferably from approximately 8 to 12 %.

According to a preferred embodiment of the present invention there is provided a non-tobacco moist snuff composition wherein the flavours are selected from the group containing fruits, berries, flowers, herbs, oil of fruits and edible plants or a combination thereof.

According to a preferred embodiment of the present invention there is provided a non-tobacco moist snuff composition wherein the other salt is a carbonate or ammonium chloride.

According to a preferred embodiment of the present invention there is provided a non-tobacco moist snuff composition wherein the dye is caramel (E150) or vegetable carbon (E153).

According to a preferred embodiment of the present invention there is provided a non-tobacco moist snuff composition wherein the additive is selected from the group containing extracts from fruits, leaves, berries, vegetables, barks and herbs or a combination thereof.

According to a preferred embodiment of the present invention there is provided a non-tobacco moist snuff composition wherein the plant fibers are selected from the group containing maize fibers, oat fibers, cocoa fibers, tomato fibers, barley fibers, rye fibers, sugar beet fibers, buck wheat fibers, potato fibers, cellulose fibers, apple fibers or a combination thereof, preferably maize fibers are used.

According to a preferred embodiment of the present invention there is provided a non-tobacco moist snuff composition obtainable by a method wherein sweetening agents, flavouring agents, colour agents and/or dyes additionally are added in step a).

According to a preferred embodiment of the present invention there is provided a non-tobacco moist snuff composition wherein NaCl is added from approximately 6 to 16 %, preferably 8 to 10%, and glycerol is added from approximately 2 to 15 %, preferably approximately 8 to 12 % (the figures are all calculated according to formula I and II, respectively).

According to a preferred embodiment of the present invention there is provided a non-tobacco moist snuff composition obtainable by a method wherein the heat treatment in step ii) is applied during approximately 1 to 30 hours, preferably approximately 10 h, with mixing each quarter of an hour.

According to a preferred embodiment of the present invention there is provided a non-tobacco moist snuff composition wherein the plant fibers is maize fibers and its weight fraction distribution is as follows: 8-20% < 100$\mu$m, 100$\mu$m<22-34% <160$\mu$m,

160$\mu$m<28-45%<250$\mu$m, and

16-37% of the fiber blend>250$\mu$m

According to a preferred embodiment of the present invention there is provided a non-tobacco moist snuff composition wherein an ingredient selected from the group consisting of: caffeine, red clover, Echinacea, Green tea extract, Maca, Mate, Matcha, Roiboos, Ginger, Rose hips, white clover, sweet clover, ginseng, guarana, arctic root, rosmary, buckthorn, bilberry, cranberry, lingonberry, anise, clove, gum tragacanth, gum arabic, gum acacia, gum karaya, locust bean gum, xanthan gum, or combinations thereof is added.

According to a preferred embodiment of the present invention there is provided a non-tobacco moist snuff composition wherein Guarana, caffeine, ginseng, matcha, maca, mate and green tea extract is added. Guarana may be added to about 16%, or down to about 4%, depending on desired caffeine level (calculations according to formula I and II as set out below). This interval is desirable from a processing point of view. Furthermore, Guarana may be used both for its caffeine content as well as content of polyphenols, or more specific tannins. This has a health benefit as well as taste enhancement. For an application where health and taste are in focus, the addition up against 16% is preferred. Caffeine may be added to about 16% down to 1% depending on desired caffeine level. Caffeine in this interval is desirable from a processing point of view. The effect of caffeine can be regarded as well known. Ginseng may be added with 2%, 5%, 14% or 27% by weight ginsenosides. Depending on ginseng quality the additions of ginseng differ considerably. All the stated ginsenoside concentrations can be used. Starting from the lowest concentration (2% ginsenosides) from about 3 to about 9% is the desired range (calculated in accordance with formula I and II as set out below). For higher concentration of ginsenosides, the amount of ginseng may be reduced. The addition of highly concentrated ginseng (27%) may be in the range of from about 0.2 to about 0.8% (calculated in accordance with formula I and II as set out below). No matter the concentration of ginsenosides an addition of ginseng up to about 20% by total weight works from a processing point of view. Effect of ginseng can be regarded as well known, and dose depends on type of application and intended use. Green tea extract in powder or ethanol can be added in levels of from about 0.5 to about 2.5 %, to achieve both taste and preservation effect (calculations according to formula I and II below). The tea-type plants matcha, rooibos, maca, mate can be used the same way as green tea extract, with the same level of addition to the product.

According to a preferred embodiment of the present invention there is provided a non-tobacco moist snuff composition wherein caffeine, gurarana and ginseng are added.

According to a preferred embodiment of the present invention there is provided a non-tobacco moist snuff composition wherein Green tea, Maca, Mate and Guarana are added.

According to a preferred embodiment of the present invention there is provided a non-tobacco moist snuff composition wherein Guarana, Ginseng, Mate, Maca and Green tea extract are added.

According to a preferred embodiment of of the present invention there is provided a non-tobacco moist snuff composition wherein Matcha and/or Green tea extract are added.

According to a preferred embodiment of the present invention there is provided a non-tobacco moist snuff composition wherein Caffeine, Guarana, Ginseng, Maca and Mate are added.

According to a preferred embodiment of the present invention there is provided a non-tobacco moist snuff composition wherein Roiboos is added.

According to a preferred embodiment of the present invention there is provided a pouch containing a moist snuff composition according to the invention.

The finalized non-tobacco moist snuff composition may be packaged in any suitable container, such as in a tin or can (optionally provided with a lid), in a plurality of individual mesh pouches, or any other package known in the art.

Preferred features of each aspect of the invention are as for each of the other aspects mutatis mutandis. The prior art documents mentioned herein are incorporated to the fullest extent permitted by law. The invention is further described in the following examples in conjunction with the appended figures, which do not limit the scope of the invention in any way. Embodiments of the present invention are described in more detail with the aid of examples of embodiments and figures, the only purpose of which is to illustrate the invention and are in no way intended to limit its extent.

**Short description of the figures**

Fig. 1 shows the manufacturing process of moist snuff in accordance with the GothiaTek® standard, when making a tobacco containing product.
Fig. 2 shows a flow sheet for the manufacturing of plant fiber-based snuff portions according to the present invention. Flavour additives as e.g. liquorice or ammonium chloride may differ from product to product, but they are desirable when aiming for a product which resembles moist tobacco-containing snuff.

**Examples**

*Example 1*

Moist snuff in accordance with the invention was manufactured in accordance with the **Gothia**Tek® standard, here adapted for a non-tobacco containing product as set out above, and said snuff was filled into pouches. The fibers that were used were:

Buckwheat fibers (SOFABRAN F 170 (buckwheat))
Maize fibers (SOFABRAN F 184-80 (maize))
Apple fibers (Vitacel ® Bio- Apple Fiber AF 12).

The buckwheat and maize fibers were obtained from AB R. Lundberg, while the Apple fibers were obtained from LCH Kemiflor AB.
The buckwheat fibers and the maize fibers were finely ground (as set out below).
The proportions were

| | | |
|---|---|---|
| Buckwheat fibers | 60 % | (approx. 90 % of the fibers with a size <250 $\mu$m) |
| Maize fibers | 20 % | (approx. 90 % of the fibers with a size <250 $\mu$m; "fine maize") |
| Apple fibers | 20 % | (approx. 60 % of the fibers with a size <315 $\mu$m) (approx. 20 % of the fibers with size <100 $\mu$m) |

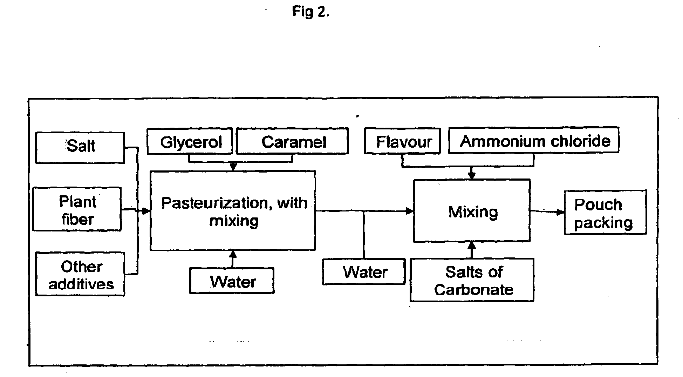

The fibers were pasteurized in a heat process in accordance with the **Gothia**Tek® standard (which normally is used when producing moist tobacco-containing snuff). By using this method the product will get a suitable consistency for packaging into pouches. The pasteurization process took place during 1 -30 hours, wherein also mixing and steam injection was performed. During the pasteurization process fibers were added together with NaCl (6-16%, preferably 8-10 %, calculated according to formula I), caramel and glycerol (2-15%, preferably 8-12 %, calculated according to formula II), depending on moisture content. Glycerol is important for the consistency of the product. NaCl is important for the product safety and the taste. Preferably the glycerol is added before the heat treatment. The blending (mixing) is also very important for the final consistency. Preferably each quarter of an hour, the mix is fully blended by using a mixing arrangement in the blender. After the pasteurization process, flavours were added together with liquorice and ammonium chloride.
The heat treated and flavoured material was then packed in pouches (or as is in cans as set out in the examples below). The manufacturing process is further illuminated in Fig. 2.
Formulas for calculating different levels independent of the moisture content of the snuff Formula (I) for calculating the salt addition:

$$salt \text{ level} = \frac{Amount \text{ of Sodium Chloride [kg]}}{Total \text{ dry weight [kg]}} \times 100 \qquad [\%]^1 \text{ See note below}$$

Formula (II) for calculating the glycerol level in the same way as above:

$$glycerol \text{ level} = \frac{Amount \text{ of glycerol [kg]}}{\text{Total dry weight [kg]}} \times 100 \qquad [\%]^1 \text{ See note below}$$

[1] Total dry weight should be calculated in relation to water content measurement by Karl Fischer analysis

*Example 2*

Moist snuff in accordance with the invention was manufactured in accordance with the **Gothia**Tek® standard as set out above, and said snuff was not filled into pouches. The fibers that were used in this example were:

   80 % Buckwheat fibers (SOFABRAN F 170 (buckwheat))
   20 % Maize fibers (fine maize), (SOFABRAN F 184-80 (maize))
   NaCl was added to 6-16%, preferably 8-10 %
   Glycerol was added to 2-15%, preferably 8-12 %.

The calculations were in accordance with the above mentioned formulas (I) and (II). The buckwheat and maize fibers were obtained from AB R. Lundberg

*Example 3*

Moist snuff in accordance with the invention was manufactured in accordance with the **Gothia**Tek® standard as set out above, and said snuff was not filled into pouches. The fibers that were used were
Buckwheat fibers (SOFABRAN F 170 (buckwheat))
Maize fibers (SOFABRAN F 184-80 (maize)).
Oat fibers (Vitacel 401)
NaCl was added to 6-16%, preferably 810 %
Glycerol was added to 2-15%, preferably 8-12 %.
The calculations were in accordance with the above mentioned formulas (I) and (II). The buckwheat and maize fibers were obtained from AB R. Lundberg. The oat fibers were obtained from LCH Kemiflor AB.
The buckwheat fibers and the maize fibers were finely ground (as set out below).
The proportions were

   | | | |
   |---|---|---|
   | Buckwheat fibers | 60 % | (approx. 90 % of the fibers with a size <250 $\mu$m) |
   | Maize fibers | 20 % | (approx. 90 % of the fibers with a size <250 $\mu$m; "fine maize") |
   | Oat fibers | 20% | (approx. 60 % of the fibers with a size <315 $\mu$m) |

The three examples 1 to 3 gave as results thereof good pinches of non-tobacco containing snuff with a good taste. The caramel which may be used in all three examples is Sockerkulör N, provider AB Fermia.

*Example 4 (a preferred embodiment)*

Moist snuff in accordance with the invention was manufactured in accordance with the **Gothia**Tek® standard as set out above, and said snuff was not filled into pouches. The fibers used were solely maize fibers (100 %).
Coarse maize (SOFABRAN F 184-400 (maize)) and
Fine maize, (SOFABRAN F 184-80 (maize))
NaCl was added to approximately 6-16 %, preferably 8-10 %
Glycerol was added to 2-15 %, preferably 8-12 %.
The calculations for NaCl and Glycerol were in accordance with the above mentioned formulas (I) and (II). The maize fibers were obtained from AB R. Lundbergs.
Here short time heat treatment was applied during 10.5 h with mixing each quarter of an hour. By using this process a well tasting product was achieved.
The fraction distribution for the maize fibers was as follows:

   8-20% < 100$\mu$m,

100μm<22-34% <160μm,
160μm<28-45%<250μm, and
16-37% of the fiber blend>250μm

*Example 5*

Moist snuff in accordance with the invention was manufactured in accordance with the **Gothia**Tek® standard as set out above, and said snuff was not filled into pouches. The fiber used was
Oat fiber (Vitacel 401, provided by LCH Kemiflor AB)
NaCl added to 6-16%, preferably 8-10%
Glycerol was added to 2-15% preferably 8-12%
Calculations were in accordance with above mentioned formulas (I) and (II). Approximately 60% of the fiber material were of size <315μm.

*Example 6*

Moist snuff in accordance with the invention was manufactured in accordance with the GothiaTek® standard as set out above, and said snuff was not filled into pouches. The fibres used were
Oat fiber (Vitacel 401, provided by LCH Kemiflor AB) or
Maize fiber (F184-400 and F184-80)
NaCl added to 6-16%, preferably 8-10%
Glycerol was added to 2-15%, preferably 8-12%
Water to achieve water content of approximately 30-40%
To this mixture Guarana, caffeine, ginseng, matcha, maca, mate, green tea extract were added to the above formulation in proportions mentioned below.
Guarana may be added (18-22% caffeine, maximum tannin content 15%, provider AB R. Lundberg) to about 16%, or down to about 4%, depending on desired caffeine level. This interval is from a processing point of view desirable. Furthermore, Guarana is used both for its caffeine content as well as content of polyphenols, or more specific tannins. This has a health benefit as well as taste enhancement. For an application where health and taste are in focus, the addition up against about 16% is preferred.
Caffeine may be added (appr. 99.5% pure, natural or synthetic, provider Bröste AB) at 13% down to 1% depending on desired caffeine level. Caffeine in this interval is from a processing point of view desirable. The effect of caffeine can be regarded as well known.
Ginseng (2%, 5%, 14% or 27% ginsenosides calculated as assay (HPLC) on individual ginsenosides Rg1, Re, Rf, Rb1, Re, Rb2, and Rd-content, provider Univar Fiskefood AB). Depending on ginseng quality the additions of ginseng differ considerably. All the stated ginsenoside concentrations may be used without any problems. Starting from the lowest concentration (2% ginsenosides) from 3 to 9% is the desired range. For higher concentration of ginsenosides, the amount of ginseng is preferably reduced. The addition of highly concentrated ginseng (27%) is in the range of from 0.2 to 0.8%. No matter the concentration of ginsenosides an addition of ginseng up to 20% works well from a processing point of view. Effect of ginseng can be regarded as well known, and dose depends on type of application and intended use.
Green tea extract in powder or ethanol solution (both with 0.2% caffeine, Catechin 2.5 - 5%, Epigallocatchin 1 - 2%, provider AB R.Lundberg) can be added in levels of 0.5 - 2.5%, to achieve both taste and preservation effect.
The plants matcha, rooibos, maça, mate can be used the same way as green tea extract, with the same level of addition to the product.
All of these additives can be added simultaneously to the product, to achieve a multifunctional product. It is however, preferred to use only caffeine, gurarana and ginseng in the same formulation. Another preferred way of formulating the product is to use Green tea extract, Maca, Mate and Guarana. Yet another preferred formulation is to use Guarana, Ginseng, Mate, Maca and Green tea extract. Roiboos can be added to all the mentioned formulations to achieve colour and taste enhancement. Matcha and Green tea extract can be used to accomplish a formulation more focused on green tea profile in taste and preservation effect. Finally a formulation with Caffeine, Guarana, Ginseng, Maca and Mate can successfully be used for an "energetic" formulation.
Calculations were in accordance with above mentioned formulas (I) and (II). Approximately 60% of the fiber material were of size <315 μm.

*Comments of the above examples*

It is also possible to use the following fibers in order to manufacture non-tobacco containing moist snuff:

- Oat fibers (e.g. VITACEL 401, provider LCH Kemiflor AB)
- Apple fibers (e.g. VITACEL Bio-Apple Fiber AF 12, provider LCH Kemiflor AB)
- Sugarbeet fibers (e.g. Fibrex ®, provider Danisco Sugar AB)
- Potato fibers (e.g. Vitacel KF 200, provider LCH Kemiflor AB)
- Coarse maize (e.g. SOFABRAN F 184-400 (Maize), provider AB R. Lundbergs)
- Fine maize, (e.g. SOFABRAN F 184-80 (Maize), provider AB R. Lundbergs)
- Buckwheat fibers (e.g. SOFABRAN F 170 (buckwheat), provider AB R. Lundbergs)
- Cellulose fibers (e.g. HEWETEN (micro-crystalline cellulose), provider LCH Kemiflor AB)
- Powdered cellulose (e.g. Vitacel, provider LCH Kemiflor AB)

When it comes to the additions, glycerol may be varied between approximately 2 -15 % according to formula I and II (with preferred results at 8-12 %), NaCl may be varied between 6 and 16 % according to formula I and II (with good results in the full interval, preferably 8-10 % is used)

Flavour additives that further may be added are liquorice and ammonium chloride.

Various embodiments of the present invention have been described above but a person skilled in the art realizes further minor alterations, which would fall into the scope of the present invention. The breadth and scope of the present invention should not be limited by any of the above-described exemplary embodiments, but should be defined only in accordance with the following claims and their equivalents. For example, any of the above-noted methods can be combined with other known methods. Other aspects, advantages and modifications within the scope of the invention will be apparent to those skilled in the art to which the invention pertains.

**Claims**

1. A non-tobacco moist snuff composition having a water content of 30 to 50 weight percent based on the total weight of the final composition, comprising one or more type of plant fibers selected from maize fibers, oat fibers, tomato fibers, barley fibers, rye fibers, sugar beet fibers, buckwheat fibers, potato fibers, cellulose fibers, apple fibers, cocoa fibers, or a combination thereof, one or more humectants, NaCl and optionally other ingredients, wherein the non-tobacco moist snuff composition is obtainable by a method comprising:

   a) providing of one or more type of plant fibers selected from maize fibers, oat fibers, tomato fibers, barley fibers, rye fibers, sugar beet fibers, buckwheat fibers, potato fibers, cellulose fibers, apple fibers, cocoa fibers, or a combination thereof, preferably in flour form, optionally preceded by grinding or cutting and/or sieving of raw material for providing said one or more type of plant fibers;

   b) processing of one or more plant fibers provided in step a), preceded by mixing if more than one type of fibers are used or if fibers with different size distribution are used; wherein step b) comprises the following steps:

   i) adding water, one or more humectants, and NaCl to the plant fibers under stirring to form a mixture;
   ii) heating and keeping the mixture heated, thus achieving a pasteurisation of the mixture,
   iii) cooling the moist snuff mixture; and
   iv) optionally adding other ingredients such as one or more other salts, humectants, dyes, flavours and flavour additives, such as liquorice and ammonium chloride,

   c) and optionally packing, either in pouches, which is preferred, or as is in cans..

2. A non-tobacco moist snuff composition according to claim 1, wherein at least one type of the plant fibers are oat fibers.

3. A non-tobacco moist snuff composition according to claim 1, wherein at least one type of the plant fibers are cocoa fibers.

4. A non-tobacco moist snuff composition according to any of claims 1-3, wherein it further comprises at least one ingredient selected from caffeine, red clover, Echinacea, Green tea extract, Maca, Mate, Matcha, Roiboos, ginger, rose hips, white clover, sweet clover, ginseng, guarana, arctic root, rosemary, buckthorn, bilberry, cranberry, lingon berry, anise, clove, gum tragacanth, gum arabic, gum acacia, gum karaya, locust bean gum, xanthan gum, or combinations thereof.

5. A non-tobacco moist snuff composition according to claim 4, wherein the at least one ingredient is caffeine, guarana and/or ginseng.

6. A non-tobacco moist snuff composition according to any one of claims 1-5, wherein it further comprises one or more other salts, dyes, flavours and flavour additives.

7. A non-tobacco moist snuff composition according to claim 6, wherein the flavour additive is selected from extracts from fruits, leaves, berries, vegetables, barks and herbs or a combination thereof.

8. A non-tobacco moist snuff composition according to claim 6, wherein the other salt is carbonate or ammonium chloride.

9. A non-tobacco moist snuff composition according to any one of the preceding claims, wherein the humectant is glycerol or propylene glycol or a combination thereof.

10. A non-tobacco moist snuff composition according to any one of the preceding claims packed in pouches, or as is in cans.

11. A pouch containing a moist snuff composition according to any one of claims 1-10.


**Patentansprüche**

1. Feuchte Schnupfzusammensetzung ohne Tabak mit einem Wassergehalt von 30 bis 50 Gewichtsprozent, bezogen auf das Gesamtgewicht des Endprodukts, umfassend einen oder mehrere Typen von Pflanzenfasern, die unter Maisfasern, Haferfasern, Tomatenfasern, Gerstefasern, Roggenfasern, Zuckerrübenfasern, Buchweizenfasern, Kartoffelfasern, Zellulosefasern, Apfelfasern, Kakaofasern oder einer Kombination davon ausgewählt sind, ein oder mehrere Befeuchtungsmittel, NaCl und optional andere Bestandteile, wobei die feuchte Schnupfzusammensetzung ohne Tabak durch ein Verfahren erhältlich ist, umfassend:

a) Bereitstellen von einem oder mehreren Typen von Pflanzenfasern, die unter Maisfasern, Haferfasern, Tomatenfasern, Gerstefasern, Roggenfasern, Zuckerrübenfasern, Buchweizenfasern, Kartoffelfasern, Zellulosefasern, Apfelfasern, Kakaofasern oder einer Kombination davon ausgewählt sind, vorzugsweise in Form von Mehl, optional mit vorausgehendem Mahlen oder Schneiden und/oder Sieben von Rohmaterial zur Bereitstellung des einen oder der mehreren Typen von Pflanzenfasern;
b) Verarbeiten von einem oder mehreren Pflanzenfasern, die in Schritt a) bereitgestellt wurden, mit vorausgehendem Mischen, wenn mehr als ein Typ von Fasern verwendet wird, oder wenn Fasern mit unterschiedlicher Größenverteilung verwendet werden; wobei Schritt b) die folgenden Schritte umfasst:

i) Zugeben von Wasser, einem oder mehreren Befeuchtungsmitteln und NaCl zu den Pflanzenfasern unter Umrühren zur Bildung einer Mischung;
ii) Aufwärmen der Mischung und Aufrechterhalten der Temperatur der aufgewärmten Mischung, wobei eine Pasteurisierung der Mischung erreicht wird;
iii) Kühlen der feuchten Schnupfmischung; und
iv) optional Zugeben von anderen Bestandteilen wie einem oder mehreren anderen Salzen, Befeuchtungsmitteln, Färbemitteln, Aromen und Aromaadditiven, wie z.B. Lakritz und Ammoniumchlorid,

c) und optional Verpacken, entweder in kleinen Beuteln, was bevorzugt wird, oder in Dosen.

2. Feuchte Schnupfzusammensetzung ohne Tabak nach Anspruch 1, wobei mindestens ein Typ von den Pflanzenfasern Haferfasern sind.

3. Feuchte Schnupfzusammensetzung ohne Tabak nach Anspruch 1, wobei mindestens ein Typ von den Pflanzenfasern Kakaofasern sind.

4. Feuchte Schnupfzusammensetzung ohne Tabak nach irgendeinem der Ansprüche 1-3, wobei sie weiter mindestens einen Bestandteil umfasst, der unter Koffein, Rotklee, Sonnenhut, Grünteeextrakt, Maca, Mate, Matcha, Roiboos, Ingwer, Hagebutte, Weißklee, Steinklee, Ginseng, Guarana, Arctic Root, Rosmarin, Kreuzdorn, Blaubeere, Moosbeere, Preiselbeere, Anis, Nelke, Tragantgummi, Gummiarabikum, Karayagummi, Johannisbrotkernmehl, Xanthan oder Kombinationen davon ausgewählt ist.

**5.** Feuchte Schnupfzusammensetzung ohne Tabak nach Anspruch 4, wobei der mindestens eine Bestandteil Koffein, Guarana und/oder Ginseng ist.

**6.** Feuchte Schnupfzusammensetzung ohne Tabak nach irgendeinem der Ansprüche 1-5, wobei sie weiter ein oder mehrere andere Salze, Färbemittel, Aromen und Aromaadditive umfasst.

**7.** Feuchte Schnupfzusammensetzung ohne Tabak nach Anspruch 6, wobei das Aromaadditiv unter Extrakten aus Obst, Blättern, Beeren, Gemüse, Rinden und Kräutern oder einer Kombination davon ausgewählt ist.

**8.** Feuchte Schnupfzusammensetzung ohne Tabak nach Anspruch 6, wobei das andere Salz Karbonat oder Ammoniumchlorid ist.

**9.** Feuchte Schnupfzusammensetzung ohne Tabak nach irgendeinem der vorhergehenden Ansprüche, wobei das Befeuchtungsmittel Glycerol oder Propylenglycol oder eine Kombination davon ist.

**10.** Feuchte Schnupfzusammensetzung ohne Tabak nach irgendeinem der vorhergehenden Ansprüche, in kleinen Beuteln verpackt, oder in Dosen.

**11.** Kleiner Beutel mit einer feuchten Schnupfzusammensetzung nach irgendeinem der Ansprüche 1-10.

**Revendications**

**1.** Composition humide à priser sans tabac ayant une teneur en eau de 30 à 50% en poids basée sur le poids total de la composition finale, comprenant un ou plusieurs types de fibres végétales choisies dans le groupe contenant les fibres de maïs, les fibres d'avoine, les fibres de tomate, les fibres d'orge, les fibres de seigle, les fibres de betteraves, les fibres de blé noir, les fibres de pomme de terre, les fibres de cellulose, les fibres de pomme, les fibres de cacao ou une combinaison de ceux-ci, un ou plusieurs agents humectants, NaCl et éventuellement d'autres ingrédients,
dans laquelle la composition humide à priser sans tabac peut être obtenue par un procédé comprenant :

a) la fourniture d'un ou de plusieurs types de fibres végétales choisies dans le groupe contenant les fibres de maïs, les fibres d'avoine, les fibres de tomate, les fibres d'orge, les fibres de seigle, les fibres de betteraves, les fibres de blé noir, les fibres de pomme de terre, les fibres de cellulose, les fibres de pomme, les fibres de cacao ou une combinaison de ceux-ci, de préférence sous forme de farine, éventuellement précédé par meulage ou par coupe et/ou tamisage de la matière première pour fournir lesdits un ou plusieurs types de fibres végétales ;
b) la transformation d'une ou plusieurs fibres végétales prévues à l'étape a), précédée par mélange, si plus d'un type de fibres sont utilisés, ou si des fibres avec différente distribution de taille sont utilisées ; l'étape b) comprenant les étapes suivantes :

i) ajouter de l'eau, un ou plusieurs agents humectants et NaCl aux fibres végétales, sous agitation pour former un mélange ;
ii) chauffer et maintenir le mélange chauffé, réalisant ainsi une pasteurisation du mélange,
iii) refroidir le mélange humide à priser; et
iv) éventuellement ajouter d'autres ingrédients tels qu'un ou plusieurs autres sels, des agents humectants, des colorants, des arômes et des additifs aromatiques, tels que la réglisse et le chlorure d'ammonium,

c) et éventuellement l'emballage, soit dans des sachets, ce qui est préféré, soit dans des boîtes.

**2.** Composition humide à priser sans tabac selon la revendication 1, dans laquelle au moins un type des fibres végétales est les fibres d'avoine.

**3.** Composition humide à priser sans tabac selon la revendication 1, dans laquelle au moins un type des fibres végétales est les fibres de cacao.

**4.** Composition humide à priser sans tabac selon l'une quelconque des revendications 1 à 3, dans laquelle la composition en outre comprend au moins un ingrédient choisi dans le groupe contenant la caféine, le trèfle rouge, l'échinacée, l'extrait de thé vert, Maca, Maté, Matcha, Roiboos, le gingembre, les fruits de l'églantier, le trèfle blanc, le mélilot, le ginseng, le guarana, Rhodiola rosea, le romarin, le nerprun, la myrtille, la canneberge, l'airelle, l'anis, le clou de girofle, la gomme adragante, la gomme arabique, la gomme d'acacia, la gomme de karaya, la gomme de caroube, la gomme de xanthane ou des combinaisons de ceux-ci.

**5.** Composition humide à priser sans tabac selon la revendication 4, dans laquelle au moins un ingrédient est la caféine, le guarana et/ou le ginseng.

**6.** Composition humide à priser sans tabac selon l'une quelconque des revendications 1 à 5, dans laquelle la composition en outre comprend un ou plusieurs autres sels, des colorants, des arômes et des additifs aromatiques.

**7.** Composition humide à priser sans tabac selon la revendication 6, dans laquelle l'additif aromatique est choisi dans le groupe contenant des extraits de fruits, de feuilles, de baies, de légumes, d'écorces et d'herbes ou d'une combinaison de ceux-ci.

**8.** Composition humide à priser sans tabac selon la revendication 6, dans laquelle l'autre sel est un carbonate ou le chlorure d'ammonium.

**9.** Composition humide à priser sans tabac selon l'une quelconque des revendications précédentes, dans laquelle l'agent humectant est le glycérol ou le propylène glycol ou une combinaison de ceux-ci.

**10.** Composition humide à priser sans tabac selon l'une quelconque des revendications précédentes, emballée dans des sachets ou dans des boîtes.

**11.** Sachet contenant une composition humide à priser selon l'une quelconque des revendications 1 à 10.

Fig 1.

The Manufacturing Process

The manufacturing process is in accordance with the **Gothia**Tek® standard, used for manufacture of tobacco containing oral moist snuff (snus).

Fig 2.

**EP 2 012 601 B2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040123873 A
- US 2004118422 A
- WO 2004056218 A